Europäisches Patentamt

European Patent Office

Office européen des brevets

(11) Publication number: **0 214 597 B1**

## EUROPEAN PATENT SPECIFICATION

(45) Date of publication of patent specification: **02.12.92**  (51) Int. Cl.⁵: **G11B 17/32**, G11B 5/48

(21) Application number: **86112112.7**

(22) Date of filing: **02.09.86**

(54) **Magnetic recording and reproducing device.**

(30) Priority: **02.09.85 JP 193511/85**

(43) Date of publication of application:
**18.03.87 Bulletin 87/12**

(45) Publication of the grant of the patent:
**02.12.92 Bulletin 92/49**

(84) Designated Contracting States:
**DE GB NL**

(56) References cited:
**US-A- 4 263 630**
**US-A- 4 320 426**

**PATENT ABSTRACTS OF JAPAN, vol. 9, no.
86 (P-349)[1809], 16th April 1985; & JP - A - 59
215 073**

**PATENT ABSTRACTS OF JAPAN, vol. 9, no.
105 (P-354)[1828], 9th May 1985; & JP - A - 59
227 068**

**IBM TECHNICAL DISCLOSURE BULLETIN, vol.
21, no. 7, December 1978, pages 2694-2695,
New York, US; G.W. BROCK et al.:
"Transducer mounting"**

**IBM TECHNICAL DISCLOSURE BULLETIN, vol.**

**20, no. 11A, April 1978, pages 4614-4615;
M.W.J. CARMICHAEL et al.: "Head-stabilizer
checking tool"**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Imanishi, Kiyokazu**
**3-1, Higashitoyoura-cho**
**Higashiosaka-shi Osaka-fu(JP)**
Inventor: **Watanabe, Wataru**
**12-15, Higashiawaji 4-chome**
**Higashiyodagawa-ku**
**Osaka-shi Osaka-fu(JP)**
Inventor: **Kobata, Kiyoshi**
**33-6, Fukazawahommachi**
**Takatsuki-shi Osaka-fu(JP)**

(74) Representative: **Eisenführ, Speiser & Partner**
**Martinistrasse 24**
**W-2800 Bremen 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a magnetic recording and/or reproducing device for recording information on a disc-like magnetic recording medium rotatable around a drive shaft and/or reproducing the information therefrom.

From US-A-4320426, it is a known such a magnetic recording and/or reproducing device comprising a carriage, a support arm and a pair of magnetic head means mounted on the carriage and the support arm respectively for slidably holding a disc-like magnetic reording medium therebetween under certain contact pressure. Each of the pair of magnetic head means includes a magnetic head chip having a spherical curvature of a certain radius such that the two magnetic head chips can be arranged offset and extending towards each other for a neglectable amount beyond the plane of rotation of the disc-like magnetic recording medium. This device is used for magnetically recording on or reproducing from both surfaces of the disc-like flexible recording medium, e.g. a floppy disc.

Another conventional magnetic recording and/or reproducing device as shown in figure 1 is known from US-A-4263630. In this known device, there are disposed a pair of head slides 2 and 3 facing each other so as to hold therebetween a floppy disc 1 at its both surfaces under a predetermined contact pressure. Magnetic head portions 4 and 5 buried in the head slides 2 and 3 respectively, are held in contact with the floppy disc 1 under a predetermined contact stress for magnetically recording thereon and/or reproducing therefrom. The head slides 2 and 3 are composed of ceramics and accommodate therein respective magnetic head portions 4 and 5 composed of ferrite. Furthermore, the head slides 2 and 3 are smoothly ground at their contact surfaces with respect to the floppy disc 1.

In the above described prior art devices, the characteristic thereof fully depends upon the quality of a state in which the magnetic head portions and the floppy disc are held in contact with each other. In the case where the floppy disc is imperfect in flatness, for example, since the deformation thereof can not be sufficiently rectified between the pair of upper and lower head slides favorable recording and/or reproduction can not be achieved owing to the fact that the floppy disc is not satisfactorily brought into contact with the magnetic head portions.

The aforementioned problem becomes remarkably conspicuous in the case where the recording density is increased. That is, as the recording density becomes high, the floppy disc and the magnetic head portions are required to minimize a spacing loss at their contact portion and accordingly, it becomes necessary to improve the floppy disc in flatness or to improve the floppy disc and the magnetic head portions in accuracy of their relative positions, thus resulting in such drawbacks that the magnetic recording and/or reproducing device of the above described type has been manufactured at increased cost or can not be practically obtained in a state where it has a desirable performance to make it possible to record on and/or play back from the floppy disc.

Accordingly, the present invention has been developed with a view to substantially eliminating the above described disadvantages inherent in the prior art magnetic recording and/or reproducing device, and has for its essential object to provide an improved magnetic recording and/or reproducing device intended for the use of both surfaces of such a disc-like flexible magnetic recording medium as floppy disc, which device is capable of ensuring the state in which the disc-like magnetic recording medium and the magnetic head portions are steadily held in contact with each other and accordingly, is capable of realizing the magnetic recording and/or reproduction at high density, even if there exists a warp of the disc-like magnetic recording medium or a deviation between the disc-like magnetic recording medium and the magnetic head portions in the relative positions thereof.

Another important object of the present invention is to provide a magnetic recording and/or reproducing device of the above described type which is capable of minimizing a vibration caused by a sliding friction produced between the floppy disc and the head slides.

In accomplishing these and other objects, according to one preferred embodiment of the present invention, there is provided a magnetic recording and/or reproducing device for recording information on a disc-like magnetic recording medium rotatable around a drive shaft and/or reproducing the information therefrom, said magnetic recording and/or reproducing device comprising:

a) a set of holding members,

b) a pair of magnetic head means securely mounted on said holding members respectively for slidably holding a disk therebetween under a predetermined contact pressure for recording and/or reproducing information thereon, and radially spaced from the axis of the disk by different distances,

c) each of said pair of magnetic head means including a magnetic head chip, each magnetic head chip extends a predetermined amount past the plane in which it contacts the disk, for controlledly deforming the disk, substantially perpendicular to the plane of the disk characterized in that

d) each of said pair of magnetic head means further includes a slide pad, the slide pads opposing each other at different sides of the recording medium,

e) each of said magnetic head means has its slide pads and each one of said magnetic head chips disposed substantially within the plane of the disk such that the slide pads and the magnetic head chips intersect a common radial plane of the disk, and

f) the slide pads intersect said radial plane on either side of the magnetic head chips and are spaced from said magnetic head chips.

The protrusion of the magnetic head chips at their top portions by a desired amount from the contact surfaces between the magnetic recording medium and the slide pads and the location of the magnetic head chips at different positions in the radial direction of the disc-like magnetic recording medium result in the advantage that the contact pressure produced between the pair of magnetic head means acts primarily to minimize the warp of the magnetic recording medium and therefore it becomes possible to obtain the state in which the magnetic recording medium is steadily held in contact with the magnetic head chips without any influence from external effects as the afore-mentioned warp of the medium or the like.

Another advantage of the present invention is that the amount of protrusion of the magnetic head chips beyond the plane in which each of the slide pads contacts the disc-like magnetic recording medium can be increased without risking the recording medium bending at its edge.

It is further advantages that even for recording and/or reproduction at high density high quality of recording and/or reproduction can easily be reached if only the dimensional amount is precisely controlled.

JP-A-59-215073 shows a magnetic recording medium also held between slide pads of a pair of magnetic head means. A magnetic head chip mounted on the lower magnetic head means extends a predetermined amount beyond the plane in which each of the slide pads contacts the disc-like magnetic recording medium. However, this known device shows only one head chip being therefore not able to use both sides of the magnetic disc as a recording medium. Further, the problems which arrive with two head chips for both slide operation in respect to the object of reducing the influence of warps of the disc-like magnetic recording medium upon the recording and/or reproduction quality increase considerably. Thus, this citation does not give any hint at the inventive teaching.

Further advantages embodiments are defined in the subclaims.

These and other objects and features of the present invention will become apparent from the following description taken in conjunction with the preferred embodiment thereof with reference to the accompanying drawings, throughout which like parts are designated by like reference numerals, and in which:

Fig. 1 is a side elevational view of a conventional magnetic recording and/or reproducing device (already referred to);

Fig. 2 is a perspective view showing a magnetic head supporting mechanism for mounting a pair of magnetic head members thereon according to one preferred embodiment of the present invention;

Fig. 3 is a side elevational view of a floppy disc and the pair of magnetic head members for use in the magnetic recording and/or reproducing device of the present invention for particularly showing a mutual relationship thereof;

Fig. 4 is a perspective view of one of the magnetic head members of Fig. 3;

Figs. 5 through 9 are views similar to Fig. 4 which particularly show modifications thereof.

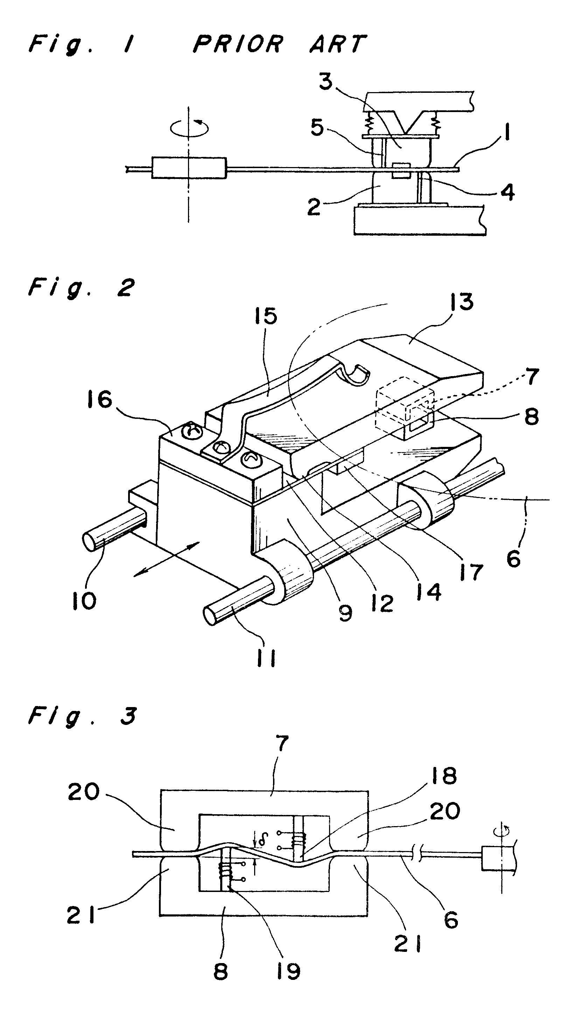

Referring now to the drawings, Fig. 2 illustrates a magnetic head supporting mechanism for securely mounting a pair of magnetic head members 7 and 8 thereon, according to one preferred embodiment of the present invention.

Signals are recorded on or reproduced from a floppy disc 6 in a state where the floppy disc 6 is held at its both surfaces between a pair of magnetic head members 7 and 8 under a predetermined contact pressure, said floppy disc 6 being composed of a sheet made of Mylar (name used in trade and manufactured by Du Pont) having a thickness of approximately 0.08 mm, which sheet is coated by such a magnetic material as $\gamma\text{-Fe}_2\text{O}_3$ or the like on both surfaces thereof. The magnetic head member 8 is securely mounted on a carriage 9 which is reciprocable through a couple of guide rods 10 and 11 fixedly mounted on a base (not shown) of a magnetic recording and/or reproducing device (not shown). Another magnetic head member 7 is fixedly mounted, through a gimbal (not shown), on one end portion of an arm 13 pivotally connected to the carriage 9 through a flat spring 12. A circular arcuate pivotal portion 14 is formed on the other end portion of the arm 13 as a center for pivotal movement thereof and is so connected to the carriage 9 as to hold the flat spring 12 therebetween under the influence of a force exerted by a spring 15 which is disposed so as to hold the floppy disc 6 between the magnetic head members 7 and 8 under the aforementioned predetermined contact pressure. A couple of holding members 16 and 17 are disposed on the flat spring 12 for connecting thereto the carriage 9 and the arm 13 respectively.

In Fig. 3, there is shown a state in which the pair of magnetic head members 7 and 8 and the floppy disc 6 are held in contact with each other. Each of the magnetic head members 7 and 8 is composed of a magnetic head chip 18 or 19 and a slide pad 20 or 21 . Each of the slide pads 20 and 21 is made of barium titanate having a high abrasion resistance and is ground smoothly at its contact surfaces with the floppy disc 6 so as not to damage the floppy disc 6 through sliding contact therewith. These slide pads 20 and 21 are so disposed as to respectively surround the magnetic head chips 18 and 19 at predetermined intervals in the radial direction of the floppy disc 6 and are so designed that the magnetic head chips 18 and 19 protrude at their top portions by a desired amount $\delta$ from the contact surfaces between the floppy disc 6 and the slide pads 20 and 21. Furthermore, the magnetic head chips 18 and 19 are located at different positions in the radial direction of the floppy disc 6 so as not to face each other at their top portions.

At this moment, the contact pressure produced between the pair of the magnetic head members 7 and 8 acts primarily to minimize the warp of the floppy disc 6 and also the deformation of the floppy disc 6 which would result from a deviation in position of one or both of the magnetic head members 7 and 8 relative to the floppy disc 6 in a direction perpendicular thereto.

On the other hand, a contact pressure between the floppy disc 6 and both of the magnetic head chips 7 and 8 for recording and reproducing magnetically is obtained as a deformation resistance in the case where the magnetic head chips 18 and 19 are forced against the floppy disc 6 by the amount $\delta$. That is, since the contact pressure is mainly determined only by the deformation resistance of the floppy disc 6 and the protruding amount $\delta$ of the magnetic head chips 18 and 19, it becomes possible to obtain the state in which the floppy disc 6 is steadily held in contact with the magnetic head members 7 and 8 without any influence from such an external factor as the aforementioned warp of the floppy disc 6 or the like, if only the dimensional amount $\delta$ has been precisely controlled. Consequently, it also becomes possible to materialize the magnetic recording and/or reproduction of high density which has been hardly obtained so far.

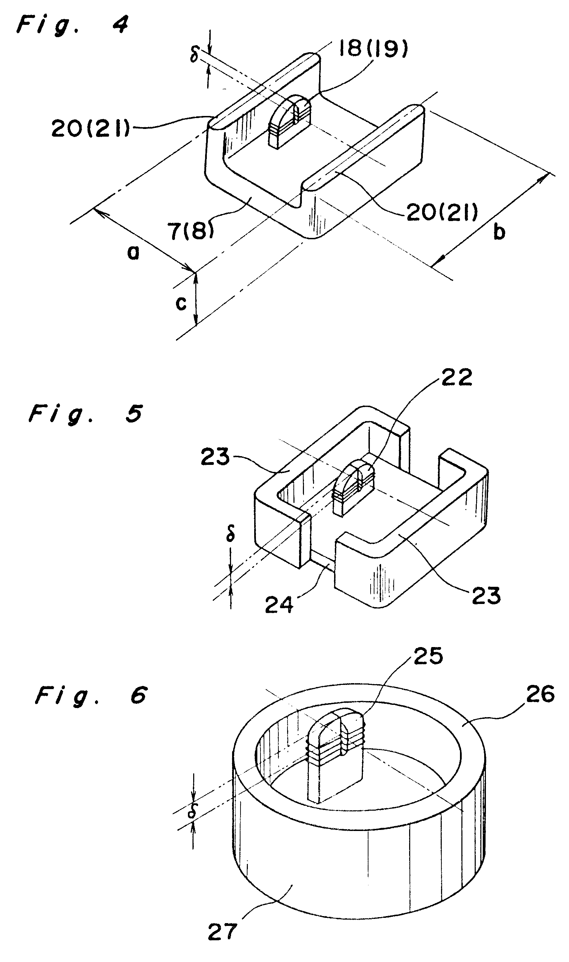

In this embodiment, the dimensions of the magnetic head member 8 as shown in Fig. 4 have been determined as a = 6 mm, b = 6 mm, c = 3.5 mm and $\delta$ = approximately 0.05 mm, and the magnetic head members 7 and 8 made of ferrite have been forced against the floppy disc 6 by the force of 2 gf to 10 gf. Furthermore, the floppy disc 6 has been coated by such a magnetic material as $\gamma$-$Fe_2O_3$. Under the above described conditions, it has become possible to obtain a linear recording density three times larger than that of the conventional manner under the same conditions.

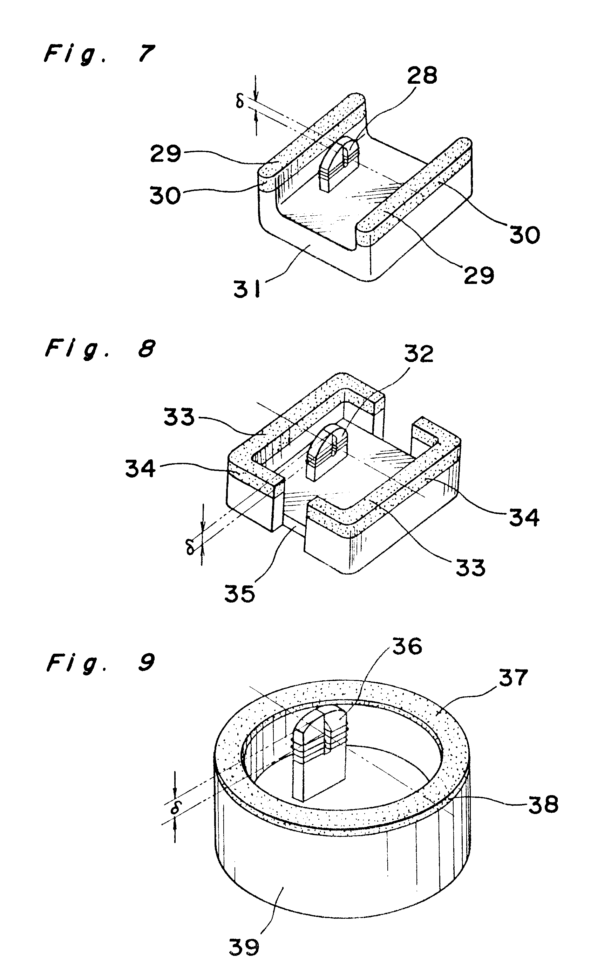

Figs. 5 to 9 illustrate various kinds of the magnetic head members according to further embodiments of the present invention. In the magnetic head member 24 of Fig. 5, additional projections are formed with the slide pad 20 or 21 of the magnetic head member 7 or 8 of Fig. 4 for restricting the floppy disc also in the circumferential direction thereof. The magnetic head member 27 of Fig. 6 is so formed as to surround the magnetic head chip 25 by the slide pad 26 shaped like a closed curve. The magnetic head members 31 , 35 and 39 of Figs. 7, 8 and 9 have configurations similar to those of the magnetic head members 8, 24 and 27 of Figs. 4, 5 and 6, respectively. In addition, such nonwoven fabrics 29, 33 and 37 as felts or the like are caused to adhere to the portions in the vicinity of the contact surfaces 30, 34 and 38 of the slide pads with the floppy disc in order that the vibration caused by the sliding contact between the floppy disc and the slide pads is desirably reduced by allowing them to softly get in contact with each other so as to absorb the aforementioned vibration through elasticity of the nonwoven fabric. In this case, since the main portions of the slide pads exert no influence on the sliding friction, it is not necessary to use barium titanate or the like which is one of such ceramics as having a property difficult to be machined.

It is to be noted that in the foregoing embodiment, although the nonwoven fabric is employed as the material applied to the surfaces of the slide pads, it may be so modified as to employ such kind of other members as collectively including fine fiber materials therein for reducing the vibration caused by the sliding contact.

According to the present invention, since there are disposed a pair of magnetic head members holding therebetween a disc-like flexible recording medium (floppy disc) at its both surfaces and each composed of a slide pad held in sliding contact with the floppy disc and a magnetic head chip disposed at predetermined intervals from the slide pad and furthermore, each of the magnetic head members is so formed that the top portion of the magnetic head chip protrudes by a predetermined amount from the contact surfaces of the slide pad with the floppy disc, the contact pressure produced between the floppy disc and both of the magnetic head chips can be determined without directly receiving an influence of the warp of the floppy disc and the deformation thereof which would result from a deviation in position of one or both of the magnetic head members relative to the floppy disc in a direction perpendicular thereto. As a result, it can be materialized to obtain a desirable state in which the floppy disc is steadily held in contact with the magnetic head members and also it becomes possible to obtain the magnetic recording and/or reproduction of high density which has been hardly obtained so far.

## Claims

1. A magnetic recording and/or reproducing device for recording information on a disc-like magnetic recording medium (6) rotatable around a drive shaft and/or reproducing the information therefrom, said magnetic recording and/or reproducing device comprising:

a) a set of holding members (9, 13),

b) a pair of magnetic head means (7, 8; 24; 27; 31; 35; 39) securely mounted on said holding members (9, 13) respectively for slidably holding a disk- (6) therebetween under a predetermined contact pressure for recording and/or reproducing information thereon, and radially spaced from the axis of the disk by different distances,

c) each of said pair of magnetic head means (7, 8; 24, 27; 31; 35; 39) including a magnetic head chip (18, 19; 22; 25; 28; 32; 36), each magnetic head chip (18, 19; 22; 25; 28; 32; 36) extends a predetermined amount (δ) past the plane in which it contacts the disk (6) for controlledly de-forming the disk (6), substantially perpendicular to the plane of the disk (6),

characterized in that

d) each of said pair of magnetic head means (7, 8; 24; 27; 31; 35; 39) further includes a slide pad (20, 21; 23; 26; 29; 33; 27), the slide pads opposing each other at different sides of the recording medium (6),

e) each of said magnetic head means (7, 8; 24; 27; 31; 35; 39) has its slide pads (20, 21; 23; 26; 29; 33; 37) and each one of said magnetic head chip (18, 19; 22; 25; 28; 32; 36) disposed substantially within the plane of the disk- (6) such that the slide pads (20, 21; 23; 26; 29; 33; 37) and the magnetic head chips (18, 19; 22; 25; 28; 32; 36) intersect a common radial plane of the disk (6),

f) the slide pads (20, 21; 23; 26; 29; 33; 37) intersect said radial plane on either side of the magnetic head chips (18, 19; 22; 25; 28; 32; 36) and are spaced from said magnetic head chips (18, 19; 22; 25; 28, 32; 36).

2. Device according to claim 1, wherein fine fiber material being attached to each said slide pad (20, 21, 23, 26) for contacting the disk-

3. Device according to claim 1 or 2, wherein each said slide pad (20, 21) has at least one projection extending substantially parallel to the radial line extending from the center of rotation of the disk-(6) and substantially within the plane of the disk- (6).

4. Device according to claim 1 or 2, wherein each said slide pad (26; 37) is shaped like a closed curve and surrounds each said magnetic head chip (25; 36).

## Patentansprüche

1. Magnetische Aufzeichnungs- und/oder Wiedergabevorrichtung zur Aufzeichnung einer Information auf einem scheibenähnlichen Magnetaufzeichnungsmedium (6), das um eine Antriebswelle rotierbar ist, und/oder zur Wiedergabe der Information davon, wobei die magnetische Aufzeichnungs- und/oder Wiedergabevorrichtung aufweist:

a) einen Satz von Haltelementen (9, 13),

b) ein Paar von Magnetkopfmitteln (7, 8; 24; 27; 31; 35; 39), die an den Halteelementen (9, 13) befestigt sind, um eine Scheibe (6) zwischen ihnen unter einem bestimmten Berührungsdruck zur Aufzeichnung und/oder Wiedergabe einer Information darauf gleitend zu halten, und die in unterschiedlichen Abständen radial von der Achse der Scheibe angeordnet sind,

c) wobei jedes Paar der Magnetkopfmittel (7, 8; 24; 27; 31; 35; 39) einen Magnetkopfchip (18, 19; 22; 25; 28; 32; 36) aufweist, wobei jeder Magnetkopfchip (18, 19; 22; 25; 28; 32; 36) sich um eine bestimmte Länge (δ) hinter die Ebene erstreckt, in der er die Scheibe (6) berührt, um die Scheibe (6) im wesentlichen rechtwinklig zur Ebene der Scheibe (6) kontrolliert zu verformen,

dadurch gekennzeichnet, daß

d) jedes Paar der Magnetkopfmittel (7, 8; 24; 27; 31; 35; 39) außerdem ein Gleitpolster (20, 21; 23; 26; 29; 33; 37) aufweist, wobei die Gleitpolster sich an verschiedenen Seiten des Aufzeichnungsmediums (6) einander gegenüberliegen,

e) jedes der Magnetkopfmittel (7, 8; 24; 27; 31; 35; 39) seine Gleitkissen (20, 21; 23; 26; 29; 33; 37) besitzt und jeder einzelne Magnetkopfchip (18, 19; 22; 25; 28, 32; 36) im wesentlichen innerhalb der Ebene der Scheibe (6) derart angeordnet ist, daß die Gleitpolster (20, 21; 23; 26; 29; 33; 37) und die Magnetkopfchips (18, 19; 22; 25; 28, 32; 36) eine gemeinsame radiale Ebene der Scheibe (6) schneiden,

f) die Gleitpolster (20, 21; 23; 26; 29; 33; 37) die radiale Ebene an beiden Seiten der Magnetkopfchips (18, 19; 22; 25; 28; 32; 36) schneiden und im Abstand von den Magnetkopfchips (18, 19; 22; 25; 28, 32; 36) angeordnet sind.

2. Vorrichtung nach Anspruch 1, bei welcher Feinfasermaterial an jedes Gleitpolster (20, 21, 23, 26) zur Berührung der Scheibe angebracht ist.

3. Vorrichtung nach Anspruch 1 oder 2, bei welcher jedes Gleitkissen (20, 21) mindestens einen Vorsprung besitzt, der sich im wesentlichen parallel zur radialen Linie erstreckt, die sich vom Drehmittelpunkt der Scheibe (6) erstreckt und im wesentlichen innerhalb der Ebene der Scheibe (6) verläuft.

4. Vorrichtung nach Anspruch 1 oder 2, bei welcher jedes Gleitpolster (26; 37) wie eine geschlossene Kurve geformt ist und jeden Magnetkopfchip (25; 36) umschließt.

**Revendications**

1. Appareil d'enregistrement et/ou lecture magnétiques destiné à enregistrer des informations sur un support (6) d'enregistrement magnétique analogue à un disque destiné à tourner autour d'un arbre d'entraînement et/ou à lire des informations de ce support, l'appareil d'enregistrement et/ou de lecture magnétiques comprenant :

    a) un ensemble d'organes de maintien (9, 13),

    b) une paire de têtes magnétiques (7, 8 ; 24 ; 27 ; 31 ; 35 ; 39) montées à demeure sur les organes de maintien (9, 13) respectivement afin qu'elles maintiennent par glissement un disque (6) placé entre elles avec une pression prédéterminée de contact pour l'enregistrement et/ou la lecture d'informations, et séparées radialement de l'axe du disque par des distances différentes,

    c) chacune des deux têtes magnétiques (7, 8 ; 24, 27 ; 31 ; 35 ; 39) comporte une pastille de tête magnétique (18, 19 ; 22 ; 25 ; 28 ; 32 ; 36), chaque pastille de tête magnétique (18, 19 ; 22 ; 25 ; 28 ; 32 ; 36) étant disposée sur une distance prédéterminée ($\delta$) au-delà du plan forment le disque (6) en direction sensiblement perpendiculaire au plan du disque (6),

    caractérisé en ce que

    d) chacune des deux têtes magnétiques (7, 8 ; 24 ; 27 ; 31 ; 35 ; 39) comporte en outre un patin glissant (20, 21 ; 23 ; 26 ; 29 ; 33 ; 27), les deux patins glissants étant placés l'un en face de l'autre sur les faces différentes du support d'enregistrement (6),

    e) chacune des têtes magnétiques (7, 8 ; 24 ; 27 ; 31 ; 35 ; 39) a ses patins glissants (20, 21 ; 23 ; 26 ; 29 ; 33 ; 37) et une des pastilles de tête magnétique (18, 19 ; 22 ; 25 ; 28 ; 32 ; 36) placés pratiquement dans le plan du disque (6) afin que les patins glissants (20, 21 ; 23 ; 26 ; 29 ; 33 ; 37) et les pastilles de têtes magnétiques (18, 19 ; 22 ; 25 ; 28 ; 32 ; 36) recoupent un plan radial commun du disque (6),

    f) les patins glissants (20, 21 ; 23 ; 26 ; 29 ; 33 ; 37) recoupant le plan radial de part et d'autre des parties de têtes magnétiques (18, 19 ; 22 ; 25 ; 28 ; 32 ; 36) et étant distants des pastilles de têtes magnétiques (18, 19 ; 22 ; 25 ; 28 ; 32 ; 36).

2. Appareil selon la revendication 1, dans lequel un matériau à fibre fine est fixé à chaque patin glissant afin qu'il soit au contact du disque.

3. Appareil selon la revendication 1 ou 2, dans lequel chaque patin glissant (20, 21) a au moins une saillie qui est sensiblement parallèle à une droite radiale partant du centre de rotation du disque (6) et se trouvant pratiquement dans le plan du disque (6).

4. Appareil selon la revendication 1 ou 2, dans lequel chaque patin glissant (26 ; 37) a une configuration en courbe fermée et entoure chaque pastille de tête magnétique (25 ; 36).

*Fig. 1* PRIOR ART

*Fig. 2*

*Fig. 3*

Fig. 4

Fig. 5

Fig. 6

Fig. 7

Fig. 8

Fig. 9